# DEMANDE DE BREVET EUROPEEN

(11) **EP 4 686 695 A1**
(43) Date de publication de la demande: **04.02.2026**
(21) Numéro de dépôt: 25189668.4
(22) Date de dépôt: 15.07.2025
(51) Int. Cl.: B66F 9/22, B60T 13/22, B66F 9/075

(54) **MACHINE DE MANUTENTION COMPRENANT UN SYSTÈME D'ÉLECTROVANNES DE COMMANDE D'UN DISPOSITIF HYDRAULIQUE D'ACTIONNEMENT D'UN ORGANE DE LA MACHINE**

(30) Priorité: 01.08.2024 FR 2408512
(71) Demandeur: MANITOU BF, 44150 Ancenis (FR)
(72) Inventeur: CAGET, Olivier, 44150 ANCENIS (FR)
(74) Mandataire: Ipsilon

(57) **Abrégé**

L'invention concerne une machine de manutention comprenant un organe (OF) actionnable hydrauliquement, un dispositif (DA) d'actionnement hydraulique configuré pour actionner l'organe(OF); un système d'électrovannes (EV1, EV2) ; une ligne de raccordement (LR) hydraulique entre les électrovannes ; un capteur de pression (CP1) dans la ligne de raccordement (LR); une ligne d'alimentation (LA) qui relie la deuxième électrovanne (EV2) au dispositif d'actionnement (DA), un capteur de pression (CP2) dans la ligne d'alimentation (LA). Le système de pilotage (130) est configuré pour détecter un dysfonctionnement d'au moins une des électrovannes (EV1, EV2) en fonction d'une ou des pressions mesurées par l'un des ou les capteurs de pression (CP1, CP2) et de l'état d'alimentation électrique d'une ou des électrovannes.

## Description

### DOMAINE DE L'INVENTION

La présente invention concerne de manière générale une machine de manutention comprenant un système d'électrovannes de commande d'un dispositif hydraulique d'actionnement d'un organe de la machine, tel qu'un organe de freinage.

### ART ANTERIEUR

On connaît de l'état de la technique des solutions pour effectuer une vérification de l'état de fonctionnement d'un système de commande d'un dispositif hydraulique d'actionnement d'un organe de freinage et de défreinage de la machine. Durant ce processus de vérification, on vérifie qu'une électrovanne change de position conformément à une instruction de changement de position qui est transmise par un système de pilotage associé. L'instruction de changement de position peut correspondre à un état alimenté électriquement de l'électrovanne pour l'amener dans une première position ou à un état non alimenté électriquement de l'électrovanne pour lui permettre d'être rappelée, par exemple par un ressort, dans une deuxième position.

Mais selon ces solutions connues de l'état de la technique, la machine ne peut pas se déplacer au sol pendant le processus de vérification. Or, l'exécution du processus connu de vérification (diagnostic) peut prendre du temps, surtout par temps froid, tandis que l'évolution des normes de sécurité requiert des vérifications plus fréquentes de l'état de fonctionnement des électrovannes de commande d'une machine de manutention. Ce problème qui se pose pour un organe de freinage et de défreinage peut aussi se poser pour d'autres organes de fonctionnement de la machine actionnables par un dispositif d'actionnement hydraulique.

Il est ainsi souhaitable de réduire le délai de diagnostic de fonctionnement du système de commande d'un dispositif hydraulique d'actionnement d'un organe de la machine.

La présente invention a pour but de proposer une nouvelle machine permettant de pallier au moins partiellement un ou plusieurs des problèmes exposés ci-dessus.

### RESUME DE L'INVENTION

A cet effet, l'invention a pour objet une machine de manutention comprenant un châssis roulant, un système d'entrainement en déplacement au sol de la machine, et un système de manutention porté par le châssis roulant, la machine de manutention comprenant aussi :
- un organe actionnable hydrauliquement, tel qu'un organe de freinage et de défreinage ;
- un dispositif d'actionnement hydraulique configuré pour actionner ledit organe;
- un circuit hydraulique comprenant un réservoir d'huile, une ligne de refoulement communiquant avec le réservoir, et une ligne de pression permettant d'actionner ledit organe lorsque dispositif d'actionnement hydraulique est mis en communication hydraulique avec la ligne de pression ;
- un système de pilotage comprenant une première unité de pilotage et une deuxième unité de pilotage, et un système d'électrovannes qui comprend une première électrovanne à deux voies, commandable par la première unité de pilotage et une deuxième électrovanne à deux voies, commandable par la deuxième unité de pilotage;
- une ligne de raccordement hydraulique entre les électrovannes ;
- un premier capteur, appelé premier capteur de pression, configuré pour mesurer un paramètre représentatif de la pression hydraulique dans la ligne de raccordement ;
- une ligne d'alimentation hydraulique du dispositif d'actionnement, qui relie la deuxième électrovanne au dispositif d'actionnement,
- un deuxième capteur, appelé deuxième capteur de pression, configuré pour mesurer un paramètre représentatif de la pression hydraulique dans la ligne d'alimentation ;
la première électrovanne étant déplaçable entre :
une position de refoulement à l'état non alimenté électriquement de la première électrovanne, dans laquelle la ligne de raccordement communique avec le réservoir, et une position d'alimentation hydraulique, à l'état alimenté électriquement de la première électrovanne, dans laquelle la ligne de raccordement communique avec la ligne de pression,
la deuxième électrovanne étant déplaçable entre :
   une position de refoulement, à l'état non alimenté électriquement de la deuxième électrovanne, dans laquelle la ligne d'alimentation du dispositif d'actionnement communique avec le réservoir, et une position d'alimentation hydraulique, à l'état alimenté électriquement de la deuxième électrovanne, dans laquelle la ligne d'alimentation du dispositif d'actionnement communique avec la ligne de raccordement ;
   le système de pilotage étant configuré pour détecter un dysfonctionnement d'au moins une des électrovannes en fonction d'une ou des pressions mesurées par l'un des ou les capteurs de pression et de l'état d'alimentation électrique de l'une des ou des électrovannes.

L'utilisation de capteurs de pression et leur agencement avec les deux électrovannes du système d'électrovannes permet de vérifier (diagnostiquer) de manière simple et rapide l'état de fonctionnement d'une ou de chacune desdites électrovannes. Le coût d'une telle solution est en outre limité.

La comparaison des valeurs de pression mesurées par les capteurs avec des valeurs seuil permet de vérifier rapidement si l'une et/ou l'autre des électrovannes change de position conformément à une demande de changement de position émise par l'unité de pilotage associée. La mesure de pression permet de déterminer si l'état de commande (alimenté ou non alimenté électriquement) de l'électrovanne associée est cohérent avec la pression mesurée. Une telle prise en compte de la pression mesurée et de l'état de commande pour chaque électrovanne du système d'électrovannes contribue ainsi à assurer la sécurité de la machine.

La vérification du fonctionnement du système d'électrovannes peut être réalisée en temps réel ou à la commande, dès qu'une action est initiée sur la machine, telle qu'une action de déplacement au sol de la machine et/ou une action de manutention.

En cas de détection de mauvais fonctionnement d'au moins une électrovanne, un processus de mise en sécurité de la machine peut être déclenché selon lequel, par exemple, le déplacement au sol de la machine et/ou l'actionnement du système de manutention est empêché ou limité. On peut aussi prévoir que, en cas de défaut détecté sur au moins l'une des électrovannes, la machine se met en sécurité. Selon un aspect particulier, la mise en sécurité est réalisée de manière à nécessiter une intervention sur la machine pour lever le défaut avant de pouvoir réutiliser la machine.

Préférentiellement, chaque électrovanne du système d'électrovannes est associée à une unité de pilotage qui est configurée pour acquérir une valeur de pression mesurée par le capteur associé à l'électrovanne et qui est indépendante de l'unité de pilotage de l'autre électrovanne. D'éventuels défauts de fonctionnement peuvent ainsi être détectés de manière distincte sur chaque électrovanne du système d'électrovannes, ce qui améliore la fiabilité du processus de vérification d'état de fonctionnement du système d'électrovannes.

Selon un mode de réalisation, l'organe de la machine actionnable par le dispositif d'actionnement hydraulique commandable par le système d'électrovannes est un organe de freinage et de défreinage qui fait partie d'un système de freinage dit négatif. En d'autres termes, en l'absence de pression hydraulique appliquée à l'organe de freinage, l'élément de la machine destiné à être freiné ou défreiné, tel qu'une ou des roues de la machine, est freiné.

Le système peut aussi comporter une ou plusieurs des caractéristiques suivantes prises dans toute combinaison techniquement admissible.

Selon un mode de réalisation, la machine comprenant un système de traitement, qui peut comprendre le système de pilotage, ledit système de traitement permettant de commander le déplacement au sol de la machine et l'actionnement du système de manutention,
en cas de détection de dysfonctionnement d'au moins une desdites électrovannes par le système de pilotage, le système de traitement est configuré pour commander l'arrêt ou la limitation du déplacement au sol de la machine et/ou l'arrêt ou la limitation de l'actionnement du système de manutention.

Selon un mode de réalisation, à réception d'une première instruction pour une commande du dispositif d'actionnement, telle qu'une commande de défreinage, le système de pilotage est configuré pour:
a) alimenter la première électrovanne pour permettre de mettre en communication la ligne de raccordement avec la ligne de pression,
b) si la pression mesurée par le premier capteur est supérieure ou égale à une première valeur seuil, et si la pression mesurée par le deuxième capteur est inférieure à une deuxième valeur seuil, alors la deuxième unité de pilotage commande l'alimentation électrique de la deuxième électrovanne pour mettre en communication la ligne d'alimentation de l'organe avec la ligne de raccordement qui communique déjà avec la ligne de pression via la première électrovanne, sinon le système de pilotage génère un signal de détection de dysfonctionnement d'au moins une des électrovannes.

Selon un mode de réalisation, avant l'étape a), si la pression mesurée par le premier capteur est supérieure ou égale à la première valeur seuil, alors le système de pilotage, de préférence la première unité de pilotage, génère un signal de détection de dysfonctionnement de la première électrovanne.

Selon un mode de réalisation, entre l'étape a) et b) si la pression mesurée par le deuxième capteur est supérieure ou égale à la deuxième valeur seuil, alors le système de pilotage, de préférence la deuxième unité de pilotage, génère un signal de détection de dysfonctionnement de la deuxième électrovanne.

Selon un mode de réalisation, à réception d'une deuxième instruction pour une commande du dispositif d'actionnement, telle qu'une commande de freinage, le système de pilotage est configuré, pour :
c) couper l'alimentation électrique de la deuxième électrovanne pour lui permettre d'être en position de refoulement pour laquelle la ligne d'alimentation du dispositif d'actionnement communique avec le réservoir,
d) de préférence, couper l'alimentation électrique de la première électrovanne pour lui permettre d'être en position de refoulement pour laquelle la ligne de raccordement communique avec le réservoir.

Selon un mode de réalisation, entre l'étape c) et d) si la pression mesurée par le deuxième capteur est supérieure ou égale à la deuxième valeur seuil, alors le système de pilotage, de préférence la deuxième unité de pilotage, est configuré pour générer un signal de détection de dysfonctionnement de la deuxième électrovanne.

Selon un mode de réalisation, après l'étape d) si la pression mesurée par le premier capteur est supérieure ou égale à la première valeur seuil, alors le système de pilotage, de préférence la première unité de pilotage, est configuré pour générer un signal de détection de dysfonctionnement de la première électrovanne.

Selon un mode de réalisation, le dispositif d'actionnement comprend une vanne hydraulique.

Selon un mode de réalisation, le dispositif d'actionnement comprend un distributeur hydraulique.

Selon un mode de réalisation, l'organe actionnable par le dispositif d'actionnement est un organe de freinage et de défreinage.

### BREVE DESCRIPTION DES DESSINS

D'autres caractéristiques et avantages de l'invention ressortiront encore de la description qui suit, laquelle est purement illustrative et non limitative et doit être lue en regard des dessins annexés, sur lesquels :

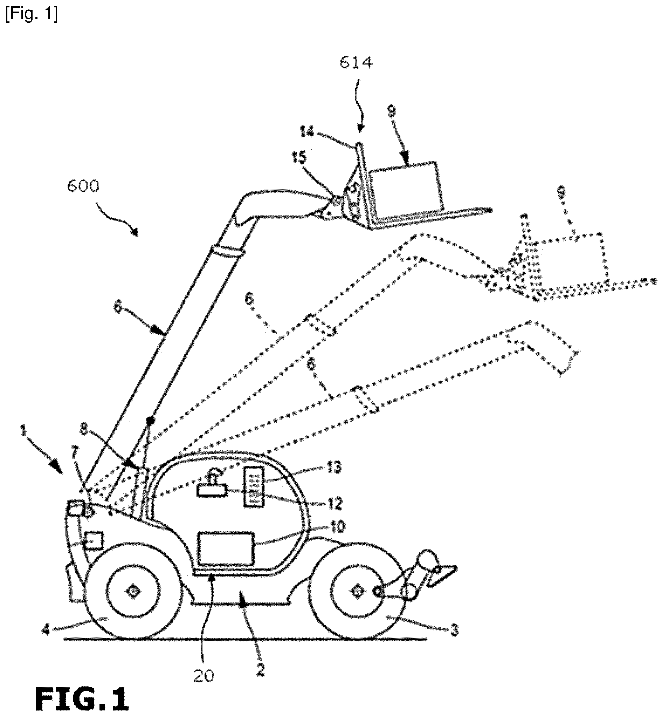

- [Fig. 1] la Figure 1 est une vue schématique d'une machine de manutention selon un mode de réalisation de l'invention ;

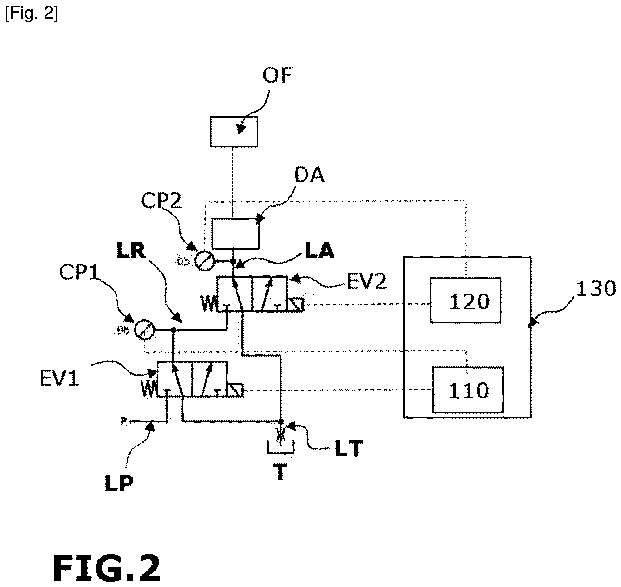

- [Fig. 2] la Figure 2 est une vue du circuit d'une partie d'un circuit hydraulique d'une machine de manutention, qui comprend un dispositif d'actionnement hydraulique d'un organe de la machine, et un système d'électrovannes configuré pour gérer la communication hydraulique entre, d'une part, le dispositif d'actionnement et d'autre part, la ligne de pression et la ligne de refoulement du circuit hydraulique selon un mode de réalisation de l'invention, les électrovannes étant en position de refoulement ; une ligne d'alimentation du dispositif d'actionnement étant munie d'un capteur de pression et une ligne de raccordement entre les deux électrovanne étant aussi munie d'un capteur de pression ;

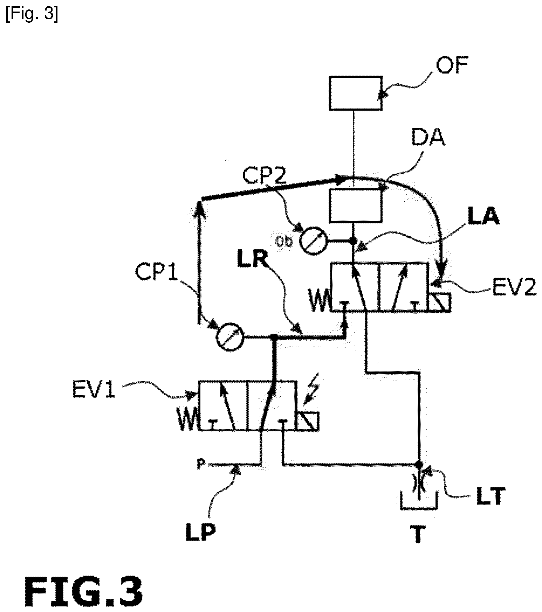

- [Fig. 3] la Figure 3 est une vue du circuit de la Figure 2, avec une électrovanne du système d'électrovannes commandée en position d'alimentation hydraulique, de sorte que la ligne de raccordement entre les deux électrovannes est en communication hydraulique avec la ligne de pression, ce qui est détecté par le premier capteur et est identifié comme un fonctionnement correct de la première électrovanne ;

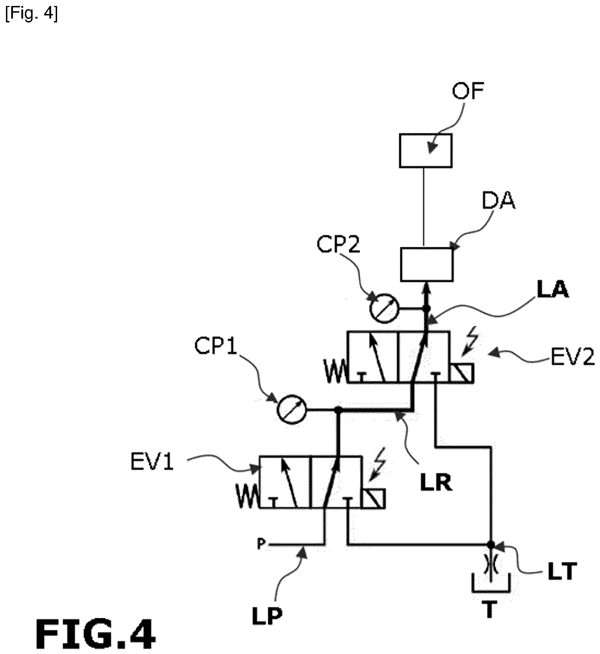

- [Fig. 4] la Figure 4 est une vue du circuit de la Figure 3, dans une configuration selon laquelle, suite à la mesure de pression par le capteur de la ligne de raccordement, la deuxième électrovanne est alimentée électriquement de sorte que la ligne de raccordement, alimentée par la ligne de pression, est mise en communication avec la ligne d'alimentation du dispositif d'actionnement, ce qui est détecté par le deuxième capteur et est identifié comme un fonctionnement correct de la deuxième électrovanne;

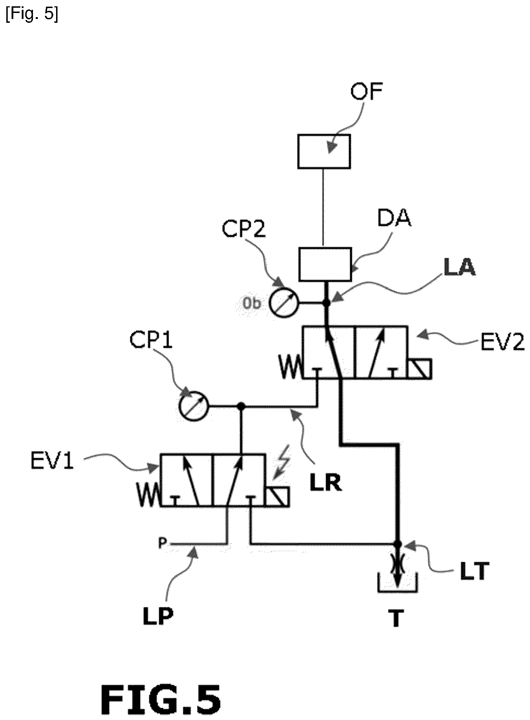

- [Fig. 5] la Figure 5 est une vue du circuit de la Figure 4, dans une configuration selon laquelle, la deuxième électrovanne n'est plus alimentée électriquement de sorte que la deuxième électrovanne est rappelée en position de refoulement selon laquelle la ligne d'alimentation est mise en communication avec la ligne de refoulement du réservoir;

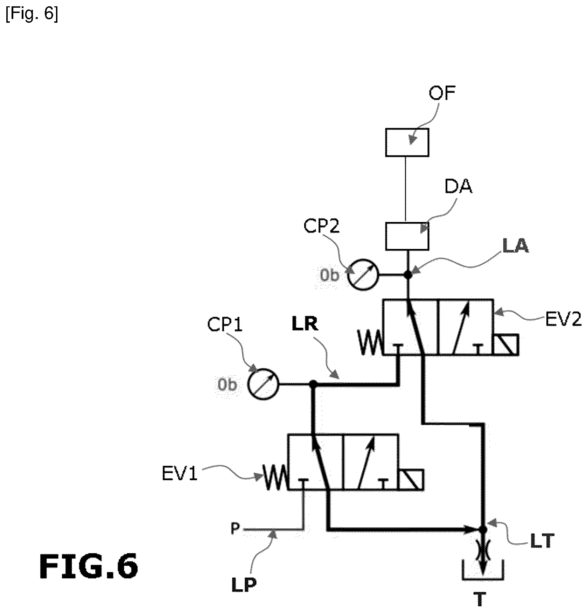

- [Fig. 6] la Figure 6 est une vue du circuit de la Figure 5, dans une configuration selon laquelle la première électrovanne n'est plus alimentée électriquement de sorte que la première électrovanne est rappelée en position de refoulement selon laquelle la ligne de raccordement est mise en communication avec la ligne de refoulement du réservoir;

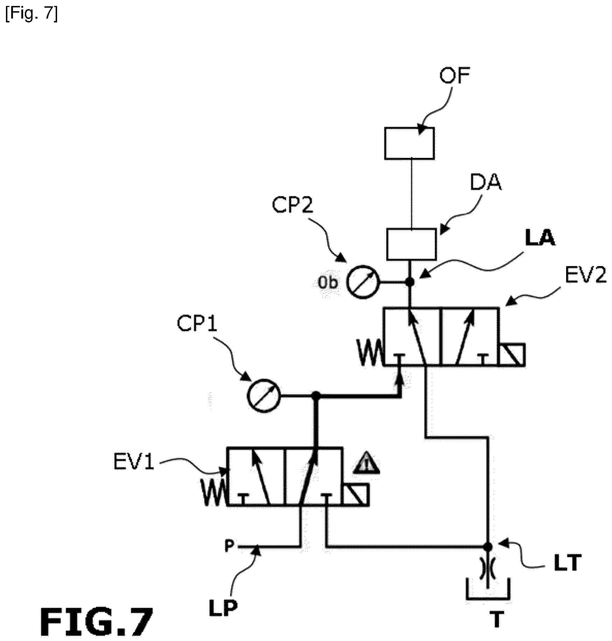

- [Fig. 7] la Figure 7 est une vue du circuit de la Figure 2, dans une configuration selon laquelle la première électrovanne est bloquée en position d'alimentation hydraulique, de sorte que, malgré un arrêt ou absence d'alimentation électrique de l'électrovanne, la ligne de raccordement reste sous pression, ce que mesure le premier capteur et ce qui est identifié comme un dysfonctionnement de la première électrovanne ;

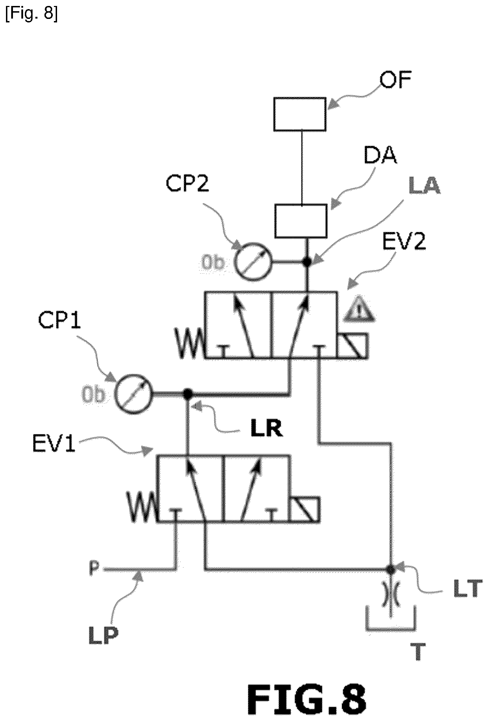

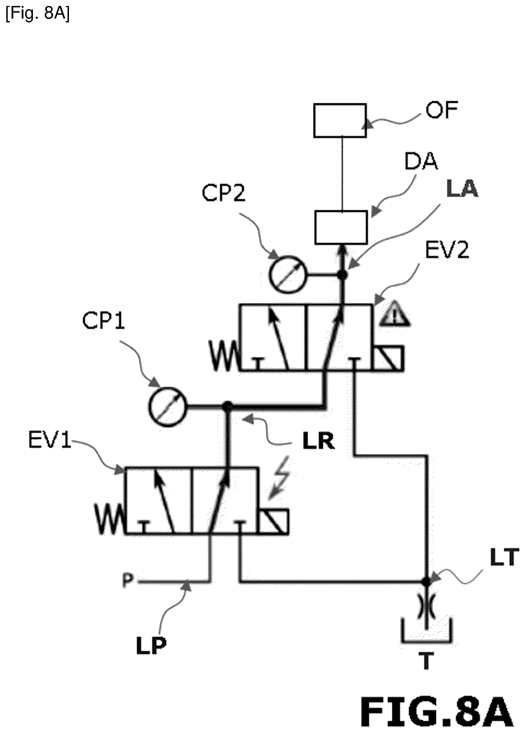

- [Fig. 8] la Figure 8 est une vue du circuit de la Figure 2, dans une configuration selon laquelle la deuxième électrovanne est bloquée en position d'alimentation hydraulique, de sorte que, malgré un arrêt ou absence d'alimentation électrique de l'électrovanne, la ligne d'alimentation reste en communication avec la ligne de raccordement, la première électrovanne étant en position de rappel;
- [Fig. 8A] la Figure 8A est une vue du circuit de la Figure 8, dans une configuration selon laquelle la première électrovanne est commandée en position d'alimentation hydraulique de sorte que la ligne de raccordement est sous pression, ainsi que la ligne d'alimentation hydraulique qui est communication avec la ligne de raccordement, alors que l'état de commande de la deuxième électrovanne est un état non alimenté électriquement, ce qui est identifié comme un dysfonctionnement de la deuxième électrovanne ;

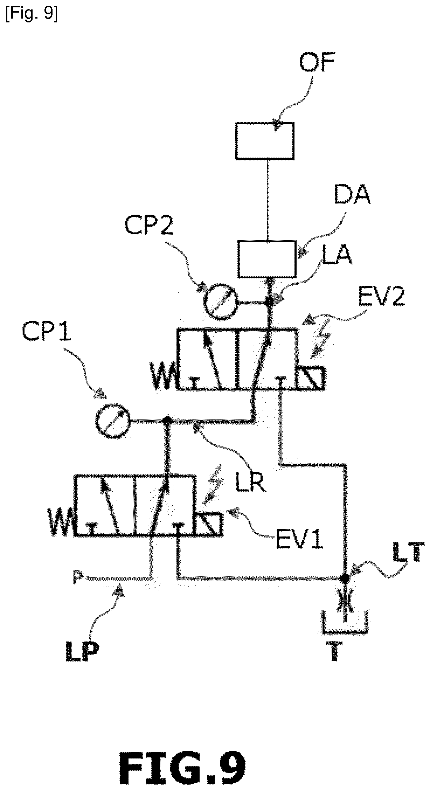

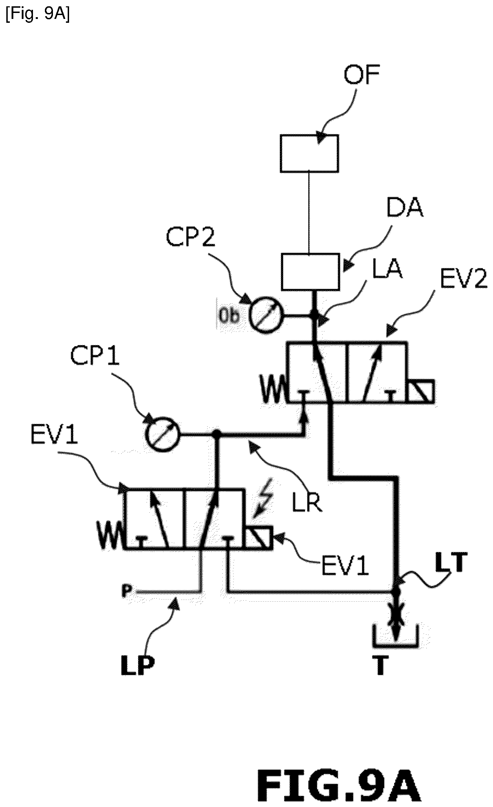

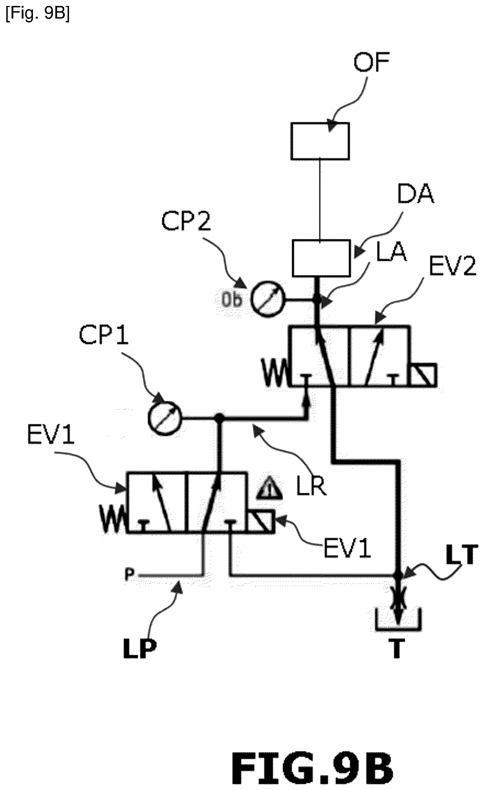

- [Fig. 9] la Figure 9 est une vue reprenant la configuration du circuit de la Figure 4, les deux électrovannes étant alimentées électriquement et en position d'alimentation hydraulique ;
- [Fig. 9A] la Figure 9A est une vue du circuit de la Figure 9, dans une configuration selon laquelle la deuxième électrovanne n'est plus alimentée électriquement de manière à revenir en position de refoulement, la première électrovanne restant alimentée électriquement et étant en position d'alimentation hydraulique ;
- [Fig. 9B] la Figure 9B est une vue du circuit de la Figure 9A, dans une configuration selon laquelle la deuxième électrovanne reste en position de refoulement, la première électrovanne n'étant plus alimentée électriquement mais étant bloquée de sorte qu'elle reste en position d'alimentation hydraulique, ce qui est détecté par le capteur de pression de la ligne de raccordement et identifié comme un dysfonctionnement de la première électrovanne ;

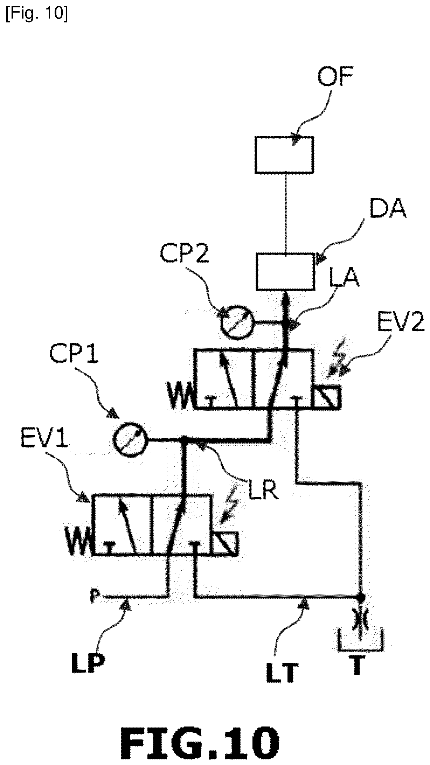

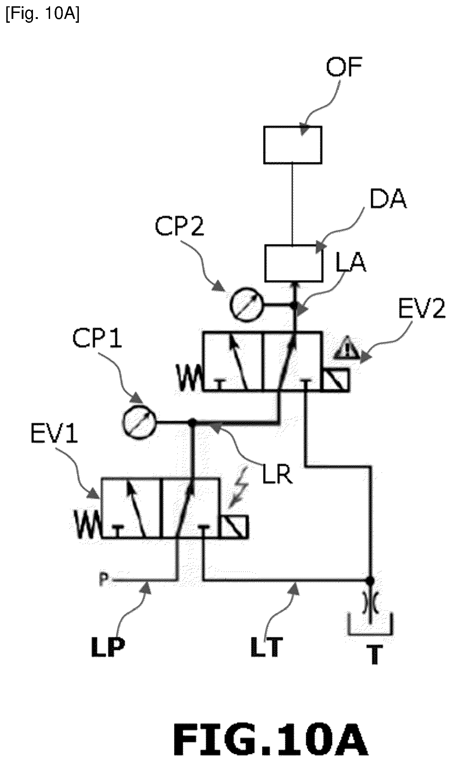

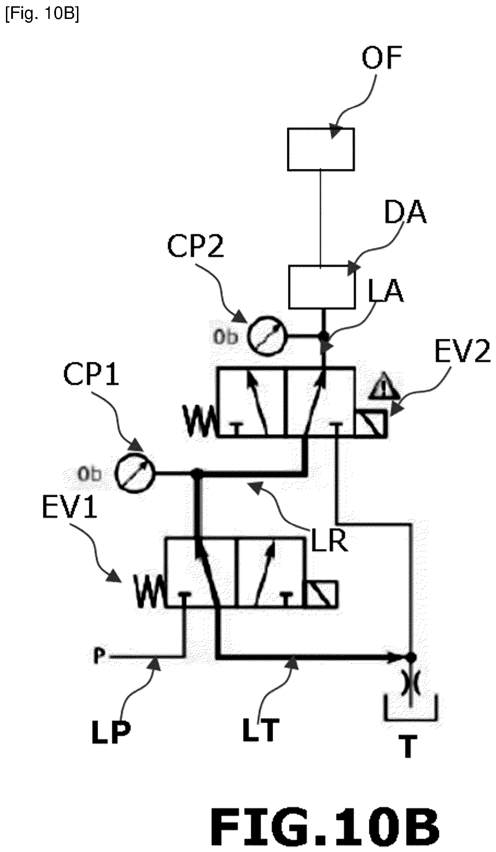

- [Fig. 10] la Figure 10 est une vue reprenant la configuration du circuit de la Figure 9, les deux électrovannes étant alimentées électriquement et en position d'alimentation hydraulique ;
- [Fig. 10A] la Figure 10A est une vue du circuit de la Figure 10, dans une configuration selon laquelle la deuxième électrovanne n'est plus alimentée électriquement mais est bloquée de sorte qu'elle reste en position d'alimentation hydraulique, la première électrovanne restant alimentée électriquement et étant en position d'alimentation hydraulique, de sorte que la ligne d'alimentation reste sous pression, ce qui est détecté par le deuxième capteur et identifié comme un dysfonctionnement de la deuxième électrovanne;
- [Fig. 10B] la Figure 10B est une vue du circuit de la Figure 10A, dans une configuration selon laquelle la première électrovanne n'est plus alimentée électriquement de manière à revenir en position de refoulement, de sorte que la ligne d'alimentation est en communication avec la ligne de refoulement via la ligne de raccordement entre les deux électrovannes, ce qui permet à l'huile présente dans la ligne d'alimentation de refouler dans le réservoir.

### DESCRIPTION DETAILLEE

Des modes de réalisation sont décrits ci-après avec référence aux dessins joints. Des numéros similaires font référence à des éléments similaires sur tous les dessins. Cependant, l'invention peut être mise en œuvre sous de nombreuses formes différentes et ne devrait pas être interprétée comme étant limitée aux modes de réalisation exposés ici. L'étendue de l'invention est définie par les revendications jointes.

Une référence dans toute la spécification à « un mode de réalisation » signifie qu'une fonctionnalité, une structure, ou une caractéristique particulière décrite en relation avec un mode de réalisation est incluse dans au moins un mode de réalisation de la présente invention. Ainsi, l'apparition de l'expression « dans un mode de réalisation » à divers emplacements dans toute la spécification ne fait pas nécessairement référence au même mode de réalisation. En outre, les fonctionnalités, les structures, ou les caractéristiques particulières peuvent être combinées de n'importe quelle manière appropriée dans un ou plusieurs modes de réalisation.

En référence aux figures, on a représenté une machine de manutention qui comprend un système d'électrovannes EV1, EV2 permettant de commander un dispositif d'actionnement hydraulique DA d'un organe OF de la machine. Dans la suite de la description, ledit organe de la machine est ou comprend un organe de freinage et défreinage, en particulier un organe de freinage et défreinage d'un système de frein de véhicule à libération hydraulique à ressort. On peut prévoir que l'organe de freinage et défreinage permette de freiner ou défreiner plusieurs éléments ou que ledit organe de freinage et défreinage de la machine comprend un organe freinage et défreinage par élément à freiner ou défreiner.

Ledit élément à freiner est par exemple une roue ou des roues du véhicule. En cas de défaillance du système d'électrovannes, si les électrovannes restent bloquées en position ouverte (configuration d'alimentation hydraulique), la ou les roues associées à l'organe de freinage et défreinage restent alors défreinées, même si l'opérateur actionne la pédale de frein. Il est donc important de surveiller le bon fonctionnement des électrovannes avant d'autoriser un déplacement au sol de la machine.

Par ailleurs, la solution selon l'invention basée sur la détection de pression en aval (considérée dans le cas d'une mise en pression de l'organe de la machine) de chaque électrovanne permet de réaliser rapidement la surveillance, ce qui permet de ne pas troubler l'opérateur, afin d'éviter qu'il active plusieurs fois sa commande de déplacement faute d'avoir une réactivité suffisante de la machine ce qui pénaliserait l'usage normal de la machine et générerait une incompréhension de l'opérateur.

L'invention s'applique aussi à d'autres types d'organes de la machine, notamment pour la sécurisation d'organe(s) de puissance hydraulique.

Le dispositif d'actionnement hydraulique DA interposé entre le système d'électrovannes et l'organe de la machine à actionner (pour le défreinage dans le cas d'un frein négatif) ou laisser libre (pour un rappel en position de freinage), peut être une vanne hydraulique permettant de commander ledit organe. En variante, le dispositif d'actionnement hydraulique DA peut être un distributeur hydraulique apte à alimenter différents organes hydrauliques, tels que des vérins hydrauliques, du système de manutention de la machine. Les vérins hydrauliques peuvent comprendre un vérin de commande de l'angle d'un bras de levage, appelé vérin de levage, un vérin de commande de l'allongement du bras lorsque celui-ci est télescopique, appelé vérin de télescopage, ou un vérin de commande de l'inclinaison d'un outil ou tablier en bout de bras, appelé vérin d'inclinaison.

Ledit organe de freinage et défreinage et le dispositif d'actionnement hydraulique peuvent former tout ou partie d'un système de frein de véhicule à libération hydraulique à ressort, encore appelé système de frein négatif.

Selon ce mode de réalisation, l'organe de freinage et défreinage est apte à prendre une configuration de freinage d'au moins un élément de la machine, tel qu'une roue du véhicule, et un système de rappel, par exemple un système de ressort, permet de rappeler l'organe de freinage et défreinage dans la configuration de freinage. L'organe de freinage et défreinage est aussi apte à prendre une configuration de libération (ou dé-freinage) grâce à un circuit de commande hydraulique qui permet de commander le passage de l'organe de freinage et défreinage dans ladite configuration de libération.

Le circuit de commande hydraulique comprend le système d'électrovannes EV1, EV2 présenté ci-après.

Comme rappelé ci-dessus, la description réalisée ci-dessous dans le cadre d'un organe de freinage d'un système de frein négatif est applicable à d'autres types d'organes de la machine actionnables hydrauliquement.

### Machine de manutention

La machine 1 de manutention peut être de type chariot à bras télescopique, comme par exemple illustré à la Figure 1, ou d'un autre type, par exemple une nacelle ou un chariot à mât.

La machine de manutention 1 comprend un châssis 2. De préférence le châssis est un châssis 2 roulant supporté sur le sol par l'intermédiaire d'un essieu avant 3 et d'un essieu arrière 4.

La machine de manutention 1 comprend un système motorisé de déplacement de la machine sur le sol. Le système motorisé de déplacement de la machine comprend par exemple un moteur électrique et/ou un moteur à combustion interne, et un système de transmission aux roues et de contrôle de direction permettant de diriger le déplacement de la machine.

Le châssis 2 roulant porte un système de manutention 600 et un système d'actionnement permettant de déplacer ledit système de manutention par rapport au châssis 2. Le système de manutention 600 peut aussi être un système de manutention de personne.

Dans les exemples illustrés, le système de manutention comprend un bras 6, usuellement appelé bras de levage, articulé au châssis 2 pour pouvoir être déplacé entre une position dite abaissée et une position levée. Dans le cas d'un chariot à mât, le système de manutention comprend un mât équipé d'un système de fourches monté coulissant le long du mât. La machine 1 de manutention peut aussi être du type nacelle avec un système de manutention qui peut comprendre un bras de levage ou un système de ciseaux.

La machine de manutention inclut un système de traitement 10 comprenant par exemple un calculateur ou plusieurs calculateurs, qui permet à l'opérateur, par l'intermédiaire d'une interface homme-machine (qui peut comprendre un organe de conduite, tel qu'un joystick) de piloter la machine de manutention, et notamment de piloter le déplacement de la machine et/ou le système de manutention, tel que la position du bras 6.

Dans l'exemple de la Figure 1, le châssis 2 roulant comprend une cabine 20 présentant une porte permettant à un opérateur de s'installer dans la cabine 20 pour piloter la machine. On peut prévoir que la machine est munie d'un écran 13 par exemple pour afficher un message relatif à un signal de dysfonctionnement.

Le bras 6 de levage (ou bras de manutention) est monté sur le châssis 2 et orientable autour d'un axe de rotation (axe de rotation référencé 7 à la Figure 1). En particulier, ledit axe de rotation 7 est horizontal lorsque le châssis 2 roulant est en appui sur un sol horizontal. Le bras 6 est saillant vers l'avant de la machine. Selon un mode de réalisation, l'axe de rotation 7 est plus proche de l'essieu arrière que de l'essieu avant de la machine. Le bras 6 peut aussi être monté sur une tourelle montée rotative sur le châssis de la machine.

Le système de manutention, tel que le bras 6, est équipé d'un dispositif de manutention 614 de charge ou de personne. Comme dans l'exemple illustré à la Figure 1, le dispositif de manutention 614 peut comprendre un porte charge 14, tel qu'un système de fourche ou de godet, articulé au bras 6 par une liaison 15 et configuré pour porter une charge utile 9.

Avantageusement, le bras 6 est du type télescopique. Le bras 6 comprend ainsi au moins deux segments déployables, par exemple à l'aide d'un vérin de déploiement, non représenté, agencé entre les au moins deux segments. En variante, le bras peut être un bras non télescopique.

Le système d'actionnement du bras inclut un actionneur de levage, par exemple un vérin hydraulique 8, qui permet de déplacer le bras 6 vers le haut et vers le bas autour de l'axe horizontal 7, sous la conduite d'un système de pilotage. En variante, l'actionneur de levage peut être un vérin électrique. Le système de pilotage peut comprendre au moins un organe de commande 12, tel qu'un joystick, ou un pupitre de commande qui communique avec le système de traitement 10 de la machine.

Le système de traitement 10 peut être configuré pour commander le vérin de levage, et le ou les éventuels autres vérins, par exemple par l'intermédiaire d'un circuit hydraulique en fonction de la sollicitation par l'opérateur du système de commande.

La machine de manutention comprend un circuit hydraulique, qui peut inclure le circuit hydraulique de commande de vérin mentionné ci-dessus, pour permettre d'actionner un ou plusieurs actionneurs hydrauliques de la machine.

Le circuit hydraulique de la machine comprend une source de pression hydraulique, telle qu'une pompe hydraulique, qui permet de mettre en pression l'huile dans une ligne, appelée ligne de pression LP, du circuit hydraulique, et un réservoir d'huile T dans lequel l'huile peut être refoulée via une ligne de refoulement LT. Le circuit hydraulique peut comprendre un distributeur hydraulique.

Dans la suite de la description, on s'intéresse à une partie du circuit hydraulique qui comprend un système d'électrovannes EV1, EV2, en lien avec un dispositif d'actionnement DA hydraulique d'un organe OF de la machine (qui dans l'exemple décrit est un organe de freinage et de défreinage d'un système de freinage négatif), dont on souhaite vérifier l'état de fonctionnement.

### Vérification de l'état de fonctionnement du système d'électrovannes

La machine comprend un système de vérification de l'état de fonctionnement du système d'électrovannes EV1, EV2 qui forme le système de commande du dispositif d'actionnement DA dudit organe OF de fonctionnement de la machine. L'état de fonctionnement du système d'électrovannes EV1, EV2 est vérifié par mesure de pression à l'aide d'un premier capteur de pression CP1 positionné sur une ligne de liaison hydraulique LR entre les électrovannes EV1, EV2 du système d'électrovannes EV1, EV2, et d'un deuxième capteur de pression CP2 positionné sur une ligne d'alimentation LA entre la deuxième électrovanne EV2 et le dispositif d'actionnement DA.

La machine comprend un système de pilotage 130 d'électrovannes qui peut faire partie du système de traitement 10 de la machine. Le système de pilotage 130 des électrovannes EV1 et EV2 comprend une unité de pilotage 110 de pilotage de la première électrovanne EV1 et une unité de pilotage 120 de la deuxième électrovanne EV2. Les unités de pilotages 110 et 120 sont de préférence distinctes. Selon une variante moins intéressante, on peut néanmoins prévoir que les unités de pilotages 110 et 120 soient une même unité de pilotage.

La première électrovanne EV1 est ainsi commandable par la première unité de pilotage 110, et la deuxième électrovanne EV2 est commandable par la deuxième unité de pilotage 120. La première unité de pilotage 110 et la deuxième unité de pilotage 120 peuvent être considérées comme faisant partie du système de traitement 10 de la machine.

Le circuit hydraulique comprend une ligne de raccordement LR entre les électrovannes EV1 et EV2 sur laquelle un capteur de pression CP1 est positionné. Autrement dit, les électrovannes EV1 et EV2 sont en série. Le circuit hydraulique comprend une ligne d'alimentation LA de l'organe de fonctionnement OF, qui relie la deuxième électrovanne EV2 à un dispositif d'actionnement DA de l'organe OF, et sur laquelle un capteur de pression CP2 est positionné.

Lorsqu'il est indiqué que le système de pilotage 130 est configuré pour effectuer une action donnée, cette action peut être effectuée par l'unité de pilotage 110 et/ou 120. Préférentiellement, l'unité de pilotage 110 effectue une action en lien avec l'électrovanne EV1 à laquelle elle est associée, et l'unité de pilotage 120 effectue une action en lien avec l'électrovanne EV2 à laquelle elle est associée. Le système de pilotage 130 est configuré pour permettre de détecter un dysfonctionnement d'au moins une des électrovannes EV1, EV2 en fonction d'une ou des pressions mesurées par l'un des ou les capteurs de pression CP1, CP2 et de l'état commandé des électrovannes par les unités de pilotage 110, 120.

Le circuit hydraulique comprend aussi la ligne de pression LP, et une ligne de retour (refoulement) au réservoir T. La ligne de refoulement LT comprend une branche raccordée à l'électrovanne EV1 et une autre branche raccordée à l'électrovanne EV2.

Comme expliqué ci-dessus, on peut prévoir que la première unité 110 et la deuxième unité 120 soient formées par une même unité de pilotage, mais préférentiellement les unités sont distinctes pour faciliter la détection d'un dysfonctionnement du système.

La première électrovanne EV1 est déplaçable entre une position de rappel en l'absence d'alimentation électrique de l'électrovanne EV1, dans laquelle la ligne de raccordement LR communique avec le réservoir T, et une position dite d'activation, à l'état alimenté électriquement, dans laquelle la ligne de raccordement LR communique avec la ligne de pression LP. Dans cette position le capteur de pression CP1 détecte une pression supérieure ou égale à une première valeur seuil correspondant à la mise en pression de la ligne de raccordement LR.

L'état alimenté ou non alimenté électriquement de chaque électrovanne EV1, EV2 est piloté par l'unité de pilotage 110, 120 correspondante.

La deuxième électrovanne EV2 est déplaçable entre une position de rappel en l'absence d'alimentation électrique de l'électrovanne EV2, dans laquelle la ligne d'alimentation LA du dispositif d'actionnement DA communique avec le réservoir T, et une position dite d'activation, à l'état alimenté électriquement, dans laquelle la ligne d'alimentation LA du dispositif d'actionnement DA communique avec la ligne de raccordement LR. Dans cette position le capteur de pression CP2 détecte une pression supérieure ou égale à une deuxième valeur seuil correspondant à la mise en pression de la ligne d'alimentation LA.

Ainsi, lorsque les électrovannes EV1 et EV2 sont chacune rappelées en position de refoulement, i.e. non alimentée électriquement, le dispositif d'actionnement DA n'est pas sous pression hydraulique, de sorte qu'il n'agit pas sur l'organe OF de la machine.

Ainsi dans le cas où ledit organe OF est un organe de freinage / défreinage d'une système de frein de véhicule à libération hydraulique à ressort (SAHR), encore appelé frein négatif, alors l'absence de pression dans le dispositif d'actionnement DA fait que l'organe de freinage OF reste rappelé contre l'élément à freiner. Autrement dit, en l'absence d'alimentation des électrovannes EV1 et EV2, l'organe OF exerce sa fonction de freinage. Par la suite et comme détaillé ci-après, si le dispositif d'actionnement DA est mis en pression avec la ligne LP par l'intermédiaire des électrovannes EV1, EV2, le dispositif d'actionnement DA transmet la pression d'alimentation à l'organe OF qui est alors déplacé en position de défreinage.

Lorsque l'électrovanne EV1 fonctionne correctement et qu'elle est commandée en étant alimentée électriquement, ladite électrovanne passe en position dite d'activation dans laquelle la ligne de raccordement LR est mise en communication fluidique avec la ligne de pression LP de sorte que le capteur CP1 mesure une pression supérieure ou égale à la première valeur seuil. En outre, lorsque l'électrovanne EV2 fonctionne correctement et qu'elle est commandée en étant alimentée électriquement, ladite commande étant déclenchée par le système de pilotage 130 suite à une mesure de pression du capteur CP1 supérieure ou égale à la première valeur seuil, ladite électrovanne passe en position active dans laquelle la ligne d'alimentation LA est mise en communication fluidique avec la ligne de pression LP, via la ligne de raccordement LR de sorte que le capteur CP2 mesure une pression supérieure ou égale à la deuxième valeur seuil. En cas de mauvais fonctionnement d'une électrovanne, le capteur de pression associé ne détecte pas de pression supérieure ou égale auxdites valeurs seuil, ce qui traduit le fait que l'électrovanne n'est pas dans la position d'activation qu'elle est supposée occupée malgré la commande électrique qui lui a été appliquée.

On entend par "état commandé" un état commandé d'alimentation électrique ou d'arrêt d'alimentation électrique.

La ligne de retour au réservoir (ou ligne de refoulement) LT est raccordée à la première électrovanne EV1 et à la deuxième électrovanne EV2 de telle sorte que lorsque les électrovannes EV1, EV2 sont en position de rappel (i.e. non alimentées électriquement) (voir par exemple Figure 2 ou Figure 6), la ligne de raccordement LR est en communication avec la ligne de retour au réservoir LT via la première électrovanne EV1 et la ligne d'alimentation LA est en communication avec la ligne de retour au réservoir LT via la deuxième électrovanne EV2.

Autrement dit, l'électrovanne EV1 comprend une voie de refoulement qui permet de relier la ligne de raccordement LR au réservoir T, en position de rappel (refoulement) de l'électrovanne EV1 (arrêt d'alimentation électrique de l'électrovanne), et une voie d'alimentation qui permet de relier la ligne de raccordement LR à la ligne de pression LP (à l'état alimenté électriquement de l'électrovanne). L'électrovanne EV2 comprend une voie de refoulement qui relie la ligne d'alimentation LA au réservoir T en position de rappel (refoulement) de l'électrovanne EV1 (arrêt d'alimentation électrique de l'électrovanne), et une deuxième voie d'alimentation LP qui relie la ligne d'alimentation LA à la ligne de raccordement LR à l'état actionné électriquement de l'électrovanne.

### Configuration par défaut du système d'électrovannes : freinage

Par défaut, comme illustré à la Figure 2, la deuxième électrovanne EV2 est laissée non alimentée pour lui permettre d'être en position de rappel (refoulement) pour laquelle la ligne d'alimentation LA du dispositif d'actionnement DA de l'organe OF communique avec le réservoir T. La première électrovanne EV1 est aussi laissée non alimentée électriquement pour lui permettre d'être en position de rappel (refoulement) pour laquelle la ligne de raccordement LR communique avec le réservoir T. Comme illustré à la Figure 2, les capteurs CP1 et CP2 mesurent alors une pression de 0 bar (notée 0b).

Dans cette configuration par défaut, le dispositif d'actionnement DA n'agit pas sur l'organe OF de sorte que lorsque l'organe OF est un organe de freinage et de défreinage rappelé en position de freinage, ledit organe de freinage continue d'exercer un effort de freinage sur un élément à freiner de la machine.

### Commande du système d'électrovannes dans le sens d'un défreinage

Le système de pilotage 130 est configuré pour, à réception d'une instruction de commande du dispositif d'actionnement DA, telle qu'une commande de défreinage du système de freinage, piloter les électrovannes de la manière suivante:

Préférentiellement, le système de pilotage 130 vérifie selon un étape initiale que les pressions mesurées sont inférieures aux valeurs seuil pour vérifier que les électrovannes sont en position de rappel (refoulement). On peut ainsi prévoir que si la pression mesurée par le capteur CP1 et/ ou CP2 est supérieure ou égale à la valeur seuil correspondante alors que le système de pilotage 130 n'a pas encore transmis de commande électrique pour le passage de l'électrovanne EV1, EV2 en position active, il existe un dysfonctionnement de l'électrovanne EV1, EV2 qui est censée être en position de refoulement (rappel), mais qui en réalité a dû rester dans la position correspondant à son état alimenté.

Etape a) : Comme par exemple illustré à la Figure 3, la première électrovanne EV1 est alimentée pour mettre en communication la ligne de raccordement LR avec la ligne de pression LP. La pression mesurée par le premier capteur CP1 dans la ligne de raccordement LR est alors supérieure ou égale à la première valeur seuil.

Sinon, i.e. si la pression mesurée par le premier capteur CP1 reste inférieure à ladite première valeur seuil malgré la commande électrique de l'étape a), un signal de détection de dysfonctionnement de l'électrovanne EV1 est émis. En effet, en position de rappel de l'électrovanne EV1, la ligne de raccordement LR est censée être mise sous pression par la ligne de pression LP. Il est alors probable que l'électrovanne EV1 soit restée dans la position correspondant à son état non alimenté où la ligne de raccordement LR est raccordée au réservoir T bien qu'elle ait reçue une commande électrique pour se déplacer en position d'activation.

Etape b) : Comme par exemple illustré à la Figure 3 et à Figure 4, si la pression mesurée par le premier capteur CP1 est supérieure ou égale à ladite première valeur seuil, alors le système de pilotage 130, de préférence la deuxième unité de pilotage 120, commande l'alimentation électrique de la deuxième électrovanne EV2 pour mettre en communication la ligne d'alimentation LA du dispositif d'actionnement DA avec la ligne de raccordement LR qui est déjà en communication fluidique avec la ligne de pression LP via la première électrovanne EV1. Le fonctionnement des électrovannes est alors considéré comme normal.

Par ailleurs, on peut prévoir que si la pression mesurée par le capteur CP2 est supérieure ou égale à la deuxième valeur seuil donnée alors que l'unité de pilotage 120 n'a pas encore transmis de commande électrique pour le passage de l'électrovanne EV2 en position active, i.e. entre l'étape a) et l'étape b), il existe un dysfonctionnement de l'électrovanne EV2 qui est censée être en position de refoulement (rappel) avec une communication de la ligne d'alimentation LA avec le réservoir T, mais qui en réalité a dû rester dans la position correspondant à son état alimenté électriquement pour lequel la ligne LA est raccordée à la ligne LR, et reçoit ainsi la pression de la ligne LP dès l'alimentation électrique de la première électrovanne EV1.

### Commande du système d'électrovannes dans le sens d'un freinage

Les unités de pilotage 110, 120 sont configurées pour, à réception d'une autre instruction de commande du dispositif d'actionnement (DA), telle qu'une instruction de commande de freinage, pour exécuter les étapes suivantes :

Etape c) : arrêter l'alimentation électrique de la deuxième électrovanne EV2 pour lui permettre d'être rappelée en position de refoulement pour laquelle la ligne d'alimentation LA du dispositif d'actionnement DA communique avec le réservoir T. Un exemple correspondant est illustré en Figure 5.

Préférentiellement, le système de pilotage 130 exécute une étape d) correspondant à l'arrêt de l'alimentation électrique de l'électrovanne EV1. Un exemple correspondant est illustré en Figure 6.

Ainsi, si l'électrovanne EV2 est bloquée en position active selon laquelle la ligne d'alimentation LA communique la ligne de raccordement LR (comme par exemple dans le cas des Figures 10A et 10B détaillé ci-après), le fait de commander le passage de l'électrovanne EV1 en position de refoulement permet (en cas de fonctionnement correct de l'électrovanne EV1 de mettre en communication la ligne d'alimentation LA avec le réservoir T via la ligne de raccordement LR, ce qui permet à l'huile présente dans la ligne d'alimentation LA de refouler vers le réservoir T, par exemple pour obtenir un freinage de la machine malgré le dysfonctionnement de la deuxième électrovanne EV2.

Avantageusement, après l'étape c), si la pression mesurée par le deuxième capteur CP2 est supérieure ou égale à la deuxième valeur seuil, alors le système de pilotage 130 émet un signal de détection de dysfonctionnement de la deuxième électrovanne EV2. En effet, la deuxième électrovanne EV2 est probablement bloquée en position alimentée alors qu'elle est censée ne plus être alimentée.

Après l'étape d) si la pression mesurée par le premier capteur CP1 est supérieure ou égale à la première valeur seuil, alors le système émet un signal de détection de dysfonctionnement de la première électrovanne EV1. En effet l'électrovanne EV1 est probablement bloquée en position alimentée alors qu'elle est censée ne plus être alimentée.

### Cas de dysfonctionnement

Pour chaque cas de dysfonctionnement d'au moins une desdites électrovannes EV1, EV2, le système de traitement 10 commande l'arrêt ou la limitation du déplacement au sol de la machine et/ou l'arrêt ou la limitation de l'actionnement du système de manutention. Cette limitation de déplacement et/ou d'actionnement est commandée tant que le dysfonctionnement est présent.

En particulier, on peut prévoir qu'en cas de dysfonctionnement d'au moins une desdites électrovannes EV1, EV2, le système de pilotage 130 génère un signal de dysfonctionnement qui est remonté au système de traitement 10. Le système de traitement 10 de la machine peut alors exécuter une procédure de mise en sécurité selon laquelle le déplacement au sol de la machine et/ou l'actionnement du système de manutention 600 est empêché ou limité, tant que le dysfonctionnement n'est pas résolu.

Selon un premier cas, comme par exemple illustré à la Figure 7, il peut arriver que l'électrovanne EV1 soit bloquée en position active alors qu'elle n'est pas alimentée électriquement. Dans ce cas le capteur de pression CP1 mesure une pression supérieure ou égale à la première valeur seuil et le système de pilotage 130 détecte alors une incohérence entre la mesure de pression par le capteur CP1 et le fait que l'électrovanne EV1 n'est pas alimentée électriquement.

Selon un deuxième cas, comme par exemple illustré à la Figure 8 et à la Figure 8A, il peut arriver que l'électrovanne EV2 soit bloquée en position active alors qu'elle n'est pas alimentée électriquement. Initialement comme illustré à la Figure 8, les électrovannes EV1, EV2 ne sont pas alimentées. Comme illustré à la Figure 8A, lorsque l'électrovanne EV1 passe en position d'alimentation hydraulique (position active) en étant alimentée électriquement, suite à une instruction correspondant du système de pilotage, par exemple en vue d'un de freinage, le capteur CP1 mesure une pression supérieure ou égale à la première valeur seuil, ce qui traduit un fonctionnement correct de l'électrovanne EV1, mais le capteur de pression CP2 mesure une pression supérieure ou égale à la deuxième valeur seuil alors que le système de pilotage n'a pas encore commandé l'alimentation électrique de l'électrovanne EV2 (qui est donc censée être en position de refoulement). Le système de pilotage 130 détecte alors une incohérence entre la mesure de pression par le capteur CP2 et le fait que l'électrovanne EV2 n'est pas alimentée électriquement.

Selon un troisième cas, comme par exemple illustré aux Figures 9, 9A, et 9B, il peut arriver que l'électrovanne EV1 soit bloquée en position active alors qu'elle est alimentée et que l'électrovanne EV2 est aussi en position active en étant alimentée électriquement, mais non bloquée (voir Figure 9). Dans cette configuration la ligne d'alimentation LA est sous pression de sorte que le dispositif d'actionnement DA actionne l'organe OF de freinage et de défreinage ce qui permet de défreiner.

Lorsque l'opérateur commande le freinage, le système de pilotage 130 arrête d'alimenter l'électrovanne EV2 de sorte qu'elle est rappelée en position de refoulement selon laquelle la ligne d'alimentation LA communique avec la ligne de refoulement LT ce qui permet de refouler l'huile dans le réservoir T, et ainsi de freiner grâce au rappel de l'organe de freinage et de défreinage dans sa position de freinage lorsqu'il n'est plus mis en pression par le dispositif d'actionnement DA (Figure 9A). Le système de pilotage 130 arrête aussi l'alimentation électrique de l'électrovanne EV1. Pour autant, comme illustré à la Figure 9B, l'électrovanne EV1 reste bloquée en position active d'alimentation hydraulique de sorte que malgré l'arrêt d'alimentation électrique de l'électrovanne EV1, le capteur de pression CP1 mesure une pression supérieure ou égale à la première valeur seuil correspondante. Le système de pilotage 130 détecte ainsi un dysfonctionnement de l'électrovanne EV1.

Selon un quatrième cas, comme par exemple illustré à la Figure 10, il peut arriver que l'électrovanne EV2 est alimentée électriquement et se bloque en position active d'alimentation hydraulique, et que l'électrovanne EV1 est aussi en position active en étant alimentée électriquement, mais non bloquée (voir Figure 9). Dans cette configuration la ligne d'alimentation LA est sous pression de sorte que le dispositif d'actionnement DA actionne l'organe de freinage/défreinage ce qui permet de défreiner.

Lorsque l'opérateur commande le freinage, le système de pilotage 130 arrête d'alimenter l'électrovanne EV2 pour la rappeler en position de refoulement, mais l'électrovanne EV2 reste bloquée en position d'alimentation hydraulique selon laquelle la ligne d'alimentation LA communique avec la ligne de raccordement LR. Le système de pilotage 130 détecte que la pression mesurée par le capteur CP2 reste supérieure ou égale à la deuxième valeur seuil correspondante (malgré l'arrêt d'alimentation électrique de l'électrovanne EV2) et détecte ainsi un dysfonctionnement (Figure 10A) qui empêche le refoulement de l'huile de la ligne d'alimentation LA et donc le freinage.

Le système de pilotage 130 arrête alors d'alimenter l'électrovanne EV1 pour la rappeler en position de refoulement de manière à raccorder la ligne de raccordement LR à la ligne de refoulement LT (et non plus à la ligne de pression LP). Ainsi, l'huile présente dans la ligne d'alimentation LA est refoulée dans le réservoir T par la ligne de raccordement LR et la ligne de refoulement LT, en passant par l'électrovanne EV1 (Figure 10B). L'organe de freinage n'est alors plus sous pression et est rappelé en position de défreinage.

Dans chaque cas, le système de pilotage 130 génère alors un signal de dysfonctionnement et de préférence système de pilotage 130 ou le système de traitement 10 exécute une procédure de mise en sécurité de la machine, par exemple en empêchant ou limitant le déplacement de la machine et/ou du système de manutention.

### Unité de pilotage et système de traitement

La ou chaque unité de pilotage et le système de traitement se présente par exemple sous la forme d'un processeur et d'une mémoire de données dans laquelle sont stockées des instructions informatiques exécutables par ledit processeur, ou encore sous la forme d'un microcontrôleur.

Autrement dit, les fonctions et étapes décrites peuvent être mise en œuvre sous forme de programme informatique ou via des composants matériels (p. ex. des réseaux de portes programmables). En particulier, les fonctions et étapes opérées par la ou chaque unité de pilotage et/ou le système de traitement, peuvent être réalisées par des jeux d'instructions ou modules informatiques implémentés dans un processeur ou contrôleur ou être réalisées par des composants électroniques dédiés ou des composants de type circuit logique programmable (ou FPGA qui est l'acronyme de l'anglais field-programmable gate array, ce qui correspond littéralement à réseau de portes programmable in-situ) ou de type circuit intégré propre à une application (ou ASIC qui est l'acronyme de l'anglais application-specific integrated circuit, ce qui correspond littéralement à circuit intégré spécifique à une application). Il est aussi possible de combiner des parties informatiques et des parties électroniques.

La ou chaque unité de pilotage ou le système de traitement est ainsi une unité ou un système électronique et/ou informatique. Lorsqu'il est précisé que ladite unité ou système est configurée pour réaliser une opération donnée, cela signifie que l'unité ou système comprend des instructions informatiques et les moyens d'exécution correspondants qui permettent de réaliser ladite opération et/ou que l'unité ou système comprend des composants électroniques correspondants.

L'invention n'est pas limitée aux modes de réalisation illustrés dans les dessins. En conséquence, il doit être entendu que, lorsque les caractéristiques mentionnées dans les revendications annexées sont suivies par des signes de référence, ces signes sont inclus uniquement dans le but d'améliorer l'intelligibilité des revendications et ne sont nullement limitatifs de la portée des revendications.

De plus, le terme « comprenant » n'exclut pas d'autres éléments ou étapes. En outre, des caractéristiques ou étapes qui ont été décrites en référence à l'un des modes de réalisation exposés ci-dessus peuvent également être utilisées en combinaison avec d'autres caractéristiques ou étapes d'autres modes de réalisation exposés ci-dessus.

## Revendications

1. Machine de manutention comprenant un châssis (2) roulant, un système d'entrainement en déplacement au sol de la machine, et un système de manutention (600) porté par le châssis (2) roulant, la machine de manutention comprenant aussi :
- un organe (OF) actionnable hydrauliquement, tel qu'un organe de freinage et de défreinage ;
- un dispositif (DA) d'actionnement hydraulique configuré pour actionner l'organe(OF);
- un circuit hydraulique comprenant un réservoir (T) d'huile, une ligne de refoulement (LT) communiquant avec le réservoir, et une ligne de pression (LP) permettant d'actionner ledit organe (OF) lorsque dispositif (DA) d'actionnement hydraulique est mis en communication hydraulique avec la ligne de pression (LP) ;
- un système de pilotage (130) comprenant une première unité de pilotage (110) et une deuxième unité de pilotage (120), et un système d'électrovannes qui comprend une première électrovanne (EV1) à deux voies, commandable par la première unité de pilotage (110) et une deuxième électrovanne (EV2) à deux voies, commandable par la deuxième unité de pilotage (120) ;
- une ligne de raccordement (LR) hydraulique entre les électrovanne (EV1 et EV2) ;
- un premier capteur, appelé premier capteur de pression (CP1), configuré pour mesurer un paramètre représentatif de la pression hydraulique dans la ligne de raccordement (LR);
- une ligne d'alimentation (LA) hydraulique du dispositif d'actionnement (DA), qui relie la deuxième électrovanne (EV2) au dispositif d'actionnement (DA),
- un deuxième capteur, appelé deuxième capteur de pression (CP2), configuré pour mesurer un paramètre représentatif de la pression hydraulique dans la ligne d'alimentation (LA);
la première électrovanne (EV1) étant déplaçable entre :
une position de refoulement à l'état non alimenté électriquement de la première électrovanne (EV1), dans laquelle la ligne de raccordement (LR) communique avec le réservoir (T), et
une position d'alimentation hydraulique, à l'état alimenté électriquement de la première électrovanne (EV1), dans laquelle la ligne de raccordement (LR) communique avec la ligne de pression (LP),
la deuxième électrovanne (EV2) étant déplaçable entre :
une position de refoulement, à l'état non alimenté électriquement de la deuxième électrovanne (EV2), dans laquelle la ligne d'alimentation (LA) du dispositif d'actionnement (DA) communique avec le réservoir (T), et
une position d'alimentation hydraulique, à l'état alimenté électriquement de la deuxième électrovanne, dans laquelle la ligne d'alimentation (LA) du dispositif d'actionnement (DA) communique avec la ligne de raccordement (LR) ;
le système de pilotage (130) étant configuré pour détecter un dysfonctionnement d'au moins une des électrovannes (EV1, EV2) en fonction d'une ou des pressions mesurées par l'un des ou les capteurs de pression (CP1, CP2) et de l'état d'alimentation électrique d'une ou des électrovannes.

2. Machine selon la revendication 1, dans laquelle, la machine comprenant un système de traitement (10), qui peut comprendre le système de pilotage (130), ledit système de traitement (10) permettant de commander le déplacement au sol de la machine et l'actionnement du système de manutention,
en cas de détection de dysfonctionnement d'au moins une desdites électrovannes (EV1, EV2) par le système de pilotage (130), le système de traitement (10) est configuré pour commander l'arrêt ou la limitation du déplacement au sol de la machine et/ou l'arrêt ou la limitation de l'actionnement du système de manutention.

3. Machine selon la revendication 1 ou 2, dans laquelle, à réception d'une première instruction pour une commande du dispositif d'actionnement (DA), telle qu'une commande de défreinage, le système de pilotage (130) est configuré pour:
a) alimenter la première électrovanne (EV1) pour permettre de mettre en communication la ligne de raccordement (LR) avec la ligne de pression (LP),
b) si la pression mesurée par le premier capteur (CP1) est supérieure ou égale à une première valeur seuil, et si la pression mesurée par le deuxième capteur (CP2) est inférieure à une deuxième valeur seuil, alors la deuxième unité de pilotage (120) commande l'alimentation électrique de la deuxième électrovanne (EV2) pour mettre en communication la ligne d'alimentation (LA) de l'organe (OF) avec la ligne de raccordement (LR) qui communique déjà avec la ligne de pression (LP) via la première électrovanne (EV1), sinon le système de pilotage (130) génère un signal de détection de dysfonctionnement d'au moins une des électrovannes (EV1, EV2).

4. Machine selon la revendication 3, dans laquelle, avant l'étape a), si la pression mesurée par le premier capteur (CP1) est supérieure ou égale à la première valeur seuil, alors le système de pilotage (130) génère un signal de détection de dysfonctionnement de la première électrovanne (EV1).

5. Machine selon la revendication 3 ou 4, dans laquelle, entre l'étape a) et b) si la pression mesurée par le deuxième capteur (CP2) est supérieure ou égale à la deuxième valeur seuil, alors le système de pilotage (130) génère un signal de détection de dysfonctionnement de la deuxième électrovanne (EV2).

6. Machine selon l'une quelconque des revendications précédentes, dans laquelle, à réception d'une deuxième instruction pour une commande du dispositif d'actionnement (DA), telle qu'une commande de freinage, le système de pilotage (130) est configuré, pour :
c) couper l'alimentation électrique de la deuxième électrovanne (EV2) pour lui permettre d'être en position de refoulement pour laquelle la ligne d'alimentation (LA) du dispositif d'actionnement (DA) communique avec le réservoir (T),
d) de préférence, couper l'alimentation électrique de la première électrovanne (EV1) pour lui permettre d'être en position de refoulement pour laquelle la ligne de raccordement (LR) communique avec le réservoir (T).

7. Machine selon la revendication 6, dans laquelle, entre l'étape c) et d) si la pression mesurée par le deuxième capteur (CP2) est supérieure ou égale à la deuxième valeur seuil, alors le système de pilotage (130), de préférence la deuxième unité de pilotage (120), est configuré pour générer un signal de détection de dysfonctionnement de la deuxième électrovanne (EV2).

8. Machine selon la revendication 6 ou 7, dans laquelle, après l'étape d) si la pression mesurée par le premier capteur (CP1) est supérieure ou égale à la première valeur seuil, alors le système de pilotage (130) est configuré pour générer un signal de détection de dysfonctionnement de la première électrovanne (EV1).

9. Machine selon l'une quelconque des revendications précédentes, dans laquelle le dispositif d'actionnement (DA) comprend une vanne hydraulique.

10. Machine selon l'une quelconque des revendications précédentes, dans laquelle le dispositif d'actionnement (DA) comprend un distributeur hydraulique.

11. Machine selon l'une quelconque des revendications précédentes, dans laquelle l'organe (OF) actionnable par le dispositif d'actionnement (DA) est un organe de freinage et de défreinage.
